# EUROPEAN PATENT APPLICATION

(11) **EP 4 831 613 A1**
(43) Date of publication of application: **28.10.2026**
(21) Application number: 25172545.3
(22) Date of filing: 25.04.2025
(51) Int. Cl.: G01N 15/1434, G01N 15/14

(54) **OBJECT LOCALIZATION SYSTEM AND METHOD FOR FLOW CYTOMETRY**

(71) Applicant: Imec VZW, 3001 Leuven (BE)
(72) Inventor: ZINOVIEV, Kirill, 3053 Haasrode (BE); VERELLEN, Niels, 3001 Heverlee (BE); YURTSEVER, Gunay, 3511 Hasselt (BE)
(74) Representative: Winger

(57) **Abstract**

An object localization system (100) for flow cytometry applications and related method are disclosed. The system comprises a fluidic channel (130) configured to convey a stream of objects (140) suspended in a carrier medium across a detection volume (133). A beamsplitter (102) divides broadband light into sample light on a sample arm (103a, 103b) and reference light on a reference arm (104). The sample arm irradiates objects in the detection volume and collects scattered or reflected sample light. An optical sensing unit (110) divides the reference light into multiple delay arms (111-1; 111-k) and recombines delayed portions of the reference light with the sample light to generate a spatially distributed interferogram (121). Differences in the objects' vertical positions induce corresponding optical path length differences on the sample arm. The system correlates the interferogram caused by each object to its vertical position within the fluidic channel.

## Description

### Field of the invention

The present invention generally relates to the field of optical systems and method for particle localization in flow cytometry applications, and more specifically to integrated optical systems for detecting particle positions within microfluidic channels.

### Background of the invention

Flow cytometry is a widely used technique in fields such as immunology, molecular biology, and cancer biology for analyzing cells or particles as they flow past laser beams while suspended in a fluid. It measures scattered light from each particle, providing information about size, internal complexity, and granularity, which is paramount for cell or particle classification and downstream sorting. Scattered light is typically collected in two directions: forward scattering, related to particle size, and side scattering, indicating internal complexity.

Miniaturizing flow cytometry onto microchips aims to increase throughput through massive parallelization of the number of flow channels and related interrogation points, reduce hardware complexity and cost. However, this drive for miniaturization presents significant challenges, particularly in maintaining consistent optical alignment of the interrogation laser beams with the stream of cells or particles. Conventional systems rely on bulky optics like lenses and mirrors, which are difficult to align and impractical for scaling to multiple parallel channels on a chip. Integrated optics offer potential solutions but introduce new complexities.

One major issue is the variability in the collected signals due to particle position within the flow channel, especially in the vertical dimension (depth) perpendicular to the flow direction. Techniques such as flow focusing aim to constrain particles to the center of the channel using sheath flows but typically require complex fluidic delivery systems with multiple inlets per channel to achieve both vertical and horizontal focusing. Moreover, uniform vertical positioning on a chip turns out to be a very challenging exercise for standard rectangular fluidic channels obtained by planar fabrication methods. Uniform illumination across the flow can mitigate some variability, but it is more difficult to implement effectively in miniaturized systems. Additionally, accurately detecting the vertical position of particles in real time is complex, especially given the high speeds at which particles flow and their short residence times in the detection region.

Known confocal microscopy methods are not suitable for real-time, high-speed flow cytometry because they require relatively long exposure times, have a very limited field of view and are sensitive to lateral deviations as well. Cells and small particles often have low optical contrast, making vertical position detection even more challenging. Without precise knowledge of each particle's vertical position, the variability in signal intensities cannot be adequately corrected, reducing the accuracy of particle analysis.

Therefore, there remains a significant need for advancements in optical systems and techniques that can accurately and quickly determine the vertical positions of particles within microfluidic channels of a flow cytometry system during high-speed analysis.

### Summary of the invention

It is an object of embodiments of the present invention to enable detection and vertical localization of particles within a fluidic channel in flow cytometry applications.

The above objective is accomplished by a system and method according to the present invention.

In one aspect, the present invention relates to an object localization system for use in flow cytometry applications. The system comprises a fluidic channel configured to convey a stream of objects suspended in a carrier medium across a detection volume. A beamsplitter is employed to split broadband light into sample light on a sample arm and reference light on a reference arm. The sample arm is configured to irradiate the objects crossing the detection volume with the sample light and to collect the sample light scattered or reflected from these objects back into the sample arm. An optical sensing unit is included in the system to divide the reference light from the reference arm into multiple delay arms. Each delay arm introduces a distinct optical path length, which is then recombined with the sample light collected into the sample arm to generate corresponding portions of a spatially distributed interferogram. Differences in the vertical positions of the objects within the fluidic channel induce corresponding optical path length differences on the sample arm, and an optical path length on each delay arm is associated with a distinct range of optical path lengths on the sample arm. The system is configured to correlate the interferogram caused by each object crossing the detection volume to the object's vertical position within the fluidic channel.

In embodiments, the sample arm includes the detection volume of the fluidic channel. Therefore, a sample path associated with the sample arm extends into the fluidic channel.

In embodiments, the plurality of optical delay arms may discretize the spatially distributed interferogram in a corresponding plurality of sampling points.

In embodiments, absolute optical path lengths or corresponding delays may be measured with respect to reference point on the sample arm or reference arm.

In embodiments, the system may further comprise illumination optics arranged on the sample arm to irradiate the objects crossing the detection volume with the sample light and collection optics arranged on the sample arm to return the sample light scattered or reflected from the objects to the sample arm, to continue propagating on the sample arm. The illumination and collection optics may be provided in a single structure, for instance implemented as a single optical out-of-plane coupler, or alternatively, may be implemented as two separate coupling elements. In the former case, at least a first coupling element may be arranged on the sample arm and configured to couple the broadband light from a light guide into the detection volume of the fluidic channel such that the objects crossing the detection volume are illuminated at an angle relative to the direction of flow of the stream of objects through the fluidic channel. Additionally, the first coupling element may be configured to collect the broadband light reversely scattered or reflected from the objects crossing the detection volume and sent the collected broadband light back into a light guide of the sample arm, or the first coupling element may be configured to emit a fraction of the broadband light propagating along the sample arm into the detection volume of the fluidic channel and transmit the remainder of the broadband light along the reference arm, thus operating as a beam splitting element in a common arm configuration. In the latter case, the collection optics may comprise a second coupling element configured to collect the broadband light scattered or reflected from the objects crossing the detection volume. In embodiments, the illumination optics and the collection optics can be formed in at least one waveguiding layer, e.g. the same waveguiding layer, of a planar photonic integrated circuit.

In embodiments, the system may further include a light source configured to supply the broadband light to the beamsplitter.

In another aspect, the present invention relates to an object localization system for use in flow cytometry applications. The system comprises a fluidic channel configured to convey a stream of objects suspended in a carrier medium across a detection volume. A beamsplitter is employed to split broadband light into sample light on a sample arm and reference light on a reference arm. The sample arm is configured to irradiate the objects crossing the detection volume with the sample light and to collect the sample light scattered or reflected from these objects back into the sample arm. The system is configured to distribute each of the reference light from the reference arm and the sample light collected into the sample arm among a plurality of interferometric devices. Each interferometric device of the plurality of interferometric devices introduces a distinct optical path length difference for a received portion of the reference light that enters the interferometric device. The optical path length difference delays the received portion of the reference light relative to a received portion of the sample light. At the output of each interferometric device, the received and delayed portion of the reference light and the receiver portion sample light are superimposed and interfere with each other to generate corresponding portions of a spatially distributed interferogram. Differences in the vertical positions of the objects within the fluidic channel induce corresponding optical path length differences on the sample arm. The optical path length difference introduced by each interferometric device corresponds to a distinct range of optical path lengths on the sample path. The system is configured to correlate the interferogram caused by each object crossing the detection volume to the object's vertical position within the fluidic channel. In embodiments, the plurality of interferometric devices may be arranged into an optical sensing unit of the system.

In embodiments, each interferometric device may comprise an imbalanced pair of interferometer arms such that the received portion of the reference light propagating along one of the pair of interferometer arms is delayed relative to the received portion of the sample light propagating along the other one of the pair of interferometer arms. Differences in the vertical positions of the objects within the fluidic channel induce corresponding optical path length differences on the sample arm. The system is configured to correlate the interferogram caused by each object crossing the detection volume to the object's vertical position within the fluidic channel.

In embodiments, the plurality of interferometric devices may be configured as a spatially heterodyne Fourier-transform spectrometer including an array of interferometer devices such as an array of imbalanced Mach-Zehnder interferometers.

In a further aspect, the present invention relates to an object localization system for use in flow cytometry applications. The system comprises a fluidic channel configured to convey a stream of objects suspended in a carrier medium across a detection volume. A beamsplitter is employed to split broadband light into sample light on a sample arm and reference light on a reference arm. The sample arm is configured to irradiate the objects crossing the detection volume with the sample light and to collect the sample light scattered or reflected from these objects back into the sample arm. Both the reference arm and the sample arm are ramified. Ramifications of the reference arm are paired with respective ramifications of the sample arm to form a set of nested interferometers. Hence, each interferometer of the set of nested interferometers includes the reference arm and one of the ramifications associated with the reference arm as a first interferometer arm and includes the sample arm and a corresponding ramification of the sample arm as a second interferometer arm. The set of interferometers are nested as the reference arm is shared by and corresponds to a common section of the first interferometer arms of all interferometers. Likewise, the sample arm is shared by and corresponds to a common section of the second interferometer arms of all interferometers. Individual sections of the first and second interferometer arms of the set of nested interferometers are associated with the paired ramifications of the reference and sample arm. The set of nested interferometers is configured to cause distinct optical delays for distinct portions of the reference light that is divided among the respective interferometers. At the output of each interferometer of the set of nested interferometers, the delayed portion of the reference light on the first interferometer arm is recombined and interferes with a portion of the sample light received along the second interferometric arm to generate corresponding portions of a spatially distributed interferogram. Differences in the objects' vertical positions within the fluidic channel induce corresponding optical delay differences on the sample arm. The optical delay introduced by each interferometer of the set of nested interferometers corresponds to a distinct range of optical delays along the sample path. The system is configured to correlate the interferogram caused by each object crossing the detection volume to the object's vertical position within the fluidic channel. In embodiments, the plurality of paired ramifications of the reference and sample arm may be arranged into an optical sensing unit of the system.

In yet another aspect, the present invention relates to object localization method for use in flow cytometers. The method involves conveying a stream of objects suspended in a carrier medium across a detection volume within a fluidic channel. Broadband light is split into reference light on a reference path and sample light on a sample path. The objects crossing the detection volume are illuminated with the sample light, and the scattered or reflected sample light from these objects is collected along the sample path. The reference light is delayed in a plurality of delay arms, and the delayed reference light is recombined with the collected sample light to generate a unique spatially distributed interferogram for each object. This interferogram is correlated to the distance between the object and a virtual reference point along the sample path, thereby determining the object's location within the fluidic channel. Differences in the objects' vertical positions, perpendicular to the flow direction, induce corresponding optical path length differences on the sample path. Each delay arm's optical path length corresponds to a distinct range of optical path lengths on the sample path.

It is an advantage of embodiments of the invention that real-time detection and vertical localization of particles within the fluidic channel are attainable. A reduction of the signal variability caused by positional uncertainties can improve the accuracy of downstream flow cytometry applications such as particle differentiation.

It is an advantage of embodiments of the invention that the integration of optical elements for illumination, signal collection, and interferogram generation on-chip eliminates the need for optical alignment and maintenance, offering a compact and low-maintenance solution.

It is an advantage of embodiments of the invention that systems with a small footprint can be obtained, which allows for the allocation of multiple fluidic channels with various interrogation points. This facilitates high-throughput analysis. Additionally, particles moving at high flow rates can be accurately detected and localized with minimal processing time delay.

It is an advantage of embodiments of the invention that optical components and photonic devices can be fabricated using microelectronics technologies, enabling easy integration with consistent and repeatable performance. The co-integration of photonic integrated circuits and microfluidic channels into a compact device makes the system ideal for lab-on-chip applications.

It is an advantage of embodiments of the invention that no complex flow focusing techniques are required, as the position of particles that do not pass through the center of the channel can be determined accurately. This also allows for compensation in subsequent optical measurements. Vertical focusing challenges can be alleviated by correlating scattered or reflected optical signals to particle depth in the fluidic channel.

It is an advantage of embodiments of the invention that systems are versatile, capable of detecting particle positions without relying on fluorescence imaging or confocal microscopy. Even submicron to micron particles with weak reflectivity or low optical contrast can be localized in the fluidic channel.

In embodiments of the invention, dispersion effects can be minimized by optimizing the waveguide design in the sample and/or reference arm, or by arranging dispersion compensation components on these arms. In embodiments, the reference and sample arms may have substantially equal optical path lengths to prevent distortions in interference patterns due to dispersion. This ensures accurate position measurements across the full detection range.

In embodiments of the invention, the system can determine particle positions over the entire range of vertical positions within the fluidic channel, making it suitable for a wide variety of particle types, shapes, and sizes.

In embodiments of the invention, the system can be configured to achieve illumination and collection of sample light from a single side or wall of the fluidic channel, whereby manufacturing costs and complexity are reduced and performance losses due to misalignments minimized.

In embodiments of the invention, the system can be calibrated to accurately determine the vertical position of various types of particles or cells, thus enhancing its adaptability and precision.

In embodiments of the invention, background and unwanted static contributions to the spatially distributed interferograms can be removed, e.g. by rejecting the respective dc-components, thereby improving the system's sensitivity.

In embodiments, the position of the particle may be the position in the direction perpendicular to the bottom of the fluidic channel or the distance to a virtual plane oriented parallelly to the bottom or top wall of the fluidic channel.

In embodiments, the optical sensing unit may comprise an array of interferometers having different optical path lengths. The output signals from each interferometer in the array are obtained at different spatial positions across the array and constitute the spatially distributed interferogram. In embodiments, the array of interferometers may comprise 10-20 elements per 10 µm of detection range. This provides a good balance between resolution and signal strength.

In embodiments, the light emitting means and light collecting means on the sample arm, and optionally also on the reference arm, may comprise the same optical component. This simplifies the optical design and reduces alignment requirements. In other embodiments, the light emitting means and light collecting means on the sample arm may comprise different optical components, which allows for optimization of both emission and collection efficiencies independently.

In embodiments, the broadband illumination source may provide light in the range of 500 to 650 nm with a bandwidth of 100-200 nm. The use of broadband light sources allows for high-resolution particle localization.

It is another advantage of embodiments of the present invention that interferogram information can be processed rapidly, facilitating high-speed flow cytometry applications.

Particular and preferred aspects of the invention are set out in accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described hereinabove. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
Fig. 1 is a diagram of an object localization system for use in flow cytometers in accordance with a first embodiment of the invention.
Fig. 2 is a diagram of an object localization system for use in flow cytometers in accordance with a second embodiment of the invention.
Fig. 3 is a diagram of an object localization system for use in flow cytometers in accordance with a third embodiment of the invention.
Fig. 4 is a diagram of an object localization system for use in flow cytometers in accordance with a fourth embodiment of the invention.
Fig. 5 is a diagram of an object localization system for use in flow cytometers in accordance with a fifth embodiment of the invention.
Fig. 6 is a diagram of an object localization system for use in flow cytometers in accordance with a sixth embodiment of the invention.
Fig. 7 is a diagram of an object localization system for use in flow cytometers in accordance with a seventh embodiment of the invention.
Fig. 8 is a diagram of an object localization system for use in flow cytometers in accordance with an eighth embodiment of the invention.
Fig. 9 illustrates interferograms obtained for two distinct path lengths along the sample arm.
Fig. 10 illustrates the steps of a particle localization method in fluidic channels in accordance with embodiments of the invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings, but the invention is not limited thereto but only by the claims.

Directional terminology in the description and the claims, such as top, bottom, front, back, leading, trailing, under, over and the like, is used for descriptive purposes with reference to the orientation of the drawings being described, and not necessarily for describing relative positions. Because components of embodiments of the present invention can be positioned in a number of different orientations, directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein, and unless otherwise specified, the term "flow channel" refers to a structure or passage designed to allow particles suspended in a fluid to flow through it. This includes microfluidic channels fabricated from materials such as silicon, glass, or polymers, and can have various cross-sectional shapes like rectangular or circular. The flow channel may be dimensioned to accommodate particles of specific sizes and is used to guide the fluid and particles in a controlled manner and along a controlled direction past a detection volume. The terms flow channel and fluidic channel are used interchangeably.

As used herein, and unless otherwise specified, the term "integrated optical system" refers to an arrangement of optical components that are fabricated and combined on a single substrate or chip. This system includes elements such as waveguides, couplers, emitters, detectors, and interferometers that are integrated using microfabrication techniques. The integration allows compact device design and efficient optical functionality within the same chip.

As used herein, and unless otherwise specified, the term "broadband light" refers to electromagnetic radiation consisting of a wide range of wavelengths, rather than a single wavelength or a narrow band. In the context of the present invention disclosure, broadband light encompasses light with bandwidths of a few hundred nanometers to achieve vertical object position resolution of a few micrometers or less, e.g. between 0.5 µm and 5.0 µm. For instance, broadband light with 100-200 nm bandwidths when operating in the visible region with central wavelengths ranging between 500 nm and 650 nm, or broadband light with 100-300 nm bandwidths when operating in the near-infrared region with central wavelengths ranging between 800 nm and 900 nm. Examples of broadband light sources include supercontinuum lasers and combined emissions from multiple superluminescent light-emitting diodes (SLEDs).

As used herein, and unless otherwise specified, the terms "microelectronics technologies" and "microfabrication techniques" refers to fabrication methods and processes commonly used in the production of microelectronic devices and integrated circuits. This includes methods such as photolithography, etching, doping, deposition, and other processing techniques that allow for the creation of fine structures and the integration of optical and electronic components on a single chip or substrate.

As used herein, and unless otherwise specified, the term "objects" refers to small discrete entities suspended within a fluid that can flow through the flow channel. This includes complex biological cells, extracellular vesicles, and non-biological particles like beads, or synthetic microspheres, with sizes ranging from submicron scales, e.g. 0.5 micrometers, to several tens of micrometers, e.g. 15-30 micrometers. The objects may be of interest for detection, counting, or characterization in flow cytometry applications.

As used herein, and unless otherwise specified, the term "detector" refers to a device or component that converts optical signals into electrical signals for analysis. Detectors can include individual photodiodes or arrays of photodiodes, e.g. co-integrated with and coupled to the outputs of the multipath optical unit that recombines the sample light with the delayed versions of the reference light and generates the spatially distributed interferogram, charge-coupled devices (CCDs), complementary metal-oxide-semiconductor (CMOS) sensors, or other photodetector arrays capable of operating at the wavelengths of the broadband source used for particle illumination. The detector may be integrated on the same chip as other optical components to form a compact system.

As used herein, and unless otherwise specified, the term "balanced detection" refers to a detection technique where signals from two matched detectors are used to subtract common noise components, enhancing the signal-to-noise ratio. In optical systems, balanced detection reduces the impact of laser intensity fluctuations and other noise sources, allowing for more precise measurements of weak signals, such as those reflected from particles with low optical contrast.

As used herein, and unless otherwise specified, the term "uniform illumination" refers to an illumination profile where the intensity of light is evenly distributed across the width of the flow channel, perpendicular to the channel height and channel length/longitudinal direction. This ensures that particles at different lateral positions within the channel receive consistent illumination, leading to uniform detection sensitivity and accuracy across the channel's width.

As used herein, and unless otherwise specified, the term "on-chip" refers to components or functionalities that are integrated onto a single substrate or semiconductor chip using microfabrication techniques. This integration includes optical waveguides, couplers, emitters, detectors, interferometers, and associated electronic circuitry, allowing for compact, scalable, and robust device implementations suitable for high-throughput applications.

As used herein, and unless otherwise specified, the term "bulk optics" refers to discrete optical components such as lenses, mirrors, prisms, and beamsplitters that are not integrated onto a chip but are assembled in free space or mounted on an optical bench. Using bulk optics can provide flexibility in adjusting optical paths and components but may result in larger, less integrated systems compared to on-chip implementations.

As used herein, and unless otherwise specified, the term "vertical positions" refers to the positions of particles along the axis perpendicular to the base of the flow channel (e.g. along the height axis, from the bottom wall to the top wall of the channel). The vertical position of particles is generally measured in a direction perpendicular to a plane associated with the substrate in which the flow channel is formed and perpendicular to a flow direction of particles induced by the channel geometry. In embodiments in which the flow channel is formed on or over a planar photonic integrated circuit that comprises the illumination optics, the collection optics, or both, the vertical position of particles is typically measured in a direction perpendicular to the plane associated with the photonic integrated circuit, e.g. perpendicularly to a top surface of the photonic integrated circuit configured for the emission and collection of sample light along the sample arm. Determining vertical positions is advantageous for understanding how particles are distributed within the flow channel and can provide valuable feedback for particle characterization and classification.

A "spatially distributed interferogram" refers to a light interference pattern generated by the recombination of sample light and reference light, where the interference pattern varies spatially across an array of detection points. This pattern is unique for each vertical position of an object within a flow channel, enabling the determination of the object's position based on the spatial distribution of the interferogram. At each detection point, a portion of the interference pattern is generated with respect to all the wavelength components contained in the reference and sample light beams (wavelength integration) and varies in intensity as a function of the optical path length difference (or associated optical delay) between the reference and the sample light beam. Permutations of the detection points, e.g., resulting from a shuffling or alternative arrangement of the detection channels (e.g. array of delay arms with increasing delays over the array), yields a permuted interferogram that is still unique.

In the context of the present invention, the term "delay path matching" refers to the process of aligning the optical path lengths of delay/delaying arms in an optical sensing unit with distinct ranges of optical path lengths on the sample arm. Each delay arm introduces a specific delay that corresponds to a unique vertical position interval within the flow channel, where light scattering or reflection from particles takes place, thus ensuring that the spatially distributed interferogram accurately reflects the vertical position of objects crossing the detection volume. As a result, thereof, the distinct optical path length associated with each delay/delaying arm inside the optical sensing unit and the corresponding, distinct range of optical path lengths on the sample arm are "commensurate".

In the context of the present invention, point-like particles or objects have a characteristic length scale or dimension that is inferior to the vertical resolution limit of the system. Their vertical position in the flow channel corresponds to the point where the particle or object is located inside the detection volume. Particles or objects of larger dimensions, superior or similar to the vertical resolution limit of the system may cause multiple candidate detection signals across the flow channel height. A unique vertical position in the flow channel can still be assigned to those extended particles or objects and inferred from the interferogram, which corresponds to a specific property of the particle or objects. Here, the specific property may relate to an external or internal boundary first encountered by the broadband light on the sample path, the center of mass, the refractive index-weighted coordinate center (RI barycenter), the density-weighted coordinate center (density barycenter), etc.

The miniaturization of flow cytometry onto microchips aims at increasing throughput through massive parallelization, reducing hardware complexity and costs, but integrated solutions still face challenges related to stable illumination of and signal detection from a stream of flowing cells or particles. One major concern is the variability in the collected signals due to particle position within the flow channel, especially in the vertical dimension (depth) perpendicular to the flow direction. When particles pass through a Gaussian-shaped illumination beam, those at different vertical positions within the flow channel receive varying light intensities, leading to inconsistent scattered signals from similar particles, e.g. identical particles, particles of the same kind and/or belonging to the same class. This variability complicates the reliable differentiation of particle types, as signal strength becomes dependent on vertical position rather than solely on particle properties. Embodiments of the present invention overcome this variability and enable detection and vertical localization of particles within a fluidic channel in flow cytometry applications.

In a first aspect, the present invention relates to an optical system for localizing objects in flow channels as typically used in flow cytometry applications. The object localization system comprises a fluidic channel configured to guide particles suspended in a carrier fluid towards and through a detection volume. The object localization system further comprises a beam splitter configured to receive broadband light and divide the broadband light into a reference arm and a sample arm. Broadband light sent along the reference arm and sample arm is respectively referred to as reference light and sample light. The sample arm includes illumination optics configured to illuminate objects crossing the detection volume of the fluidic channel with the sample light on the sample arm and further comprises collection optics configured to receive and collect scattered or reflected sample light from the illuminated objects inside the detection volume back into the sample arm. A light path associated with the sample arm - the sample path - extends into the fluidic channel at the detection volume such that the fraction of the broadband light reflected or scattered in the direction of the sample path is received by the collection optics and redirected to continue propagating along the remainder of the sample arm. That is, the sample arm can be segmented into different parts and the illumination optics arranged at an end portion of a first part of the sample arm such that a first wavefront of the sample light is emitted into the detection volume to illuminate each object crossing it. A second wavefront of sample light, corresponding to the reflected or scattered fraction of the first wavefront, is emitted by the object in the detection volume in response to the illumination with the first wavefront. The collection optics can be arranged at a beginning portion of the remaining (e.g., second) part of the sample arm such that the second wavefront is deflected, coupled or sent back into the remaining part of the sample arm. The second wavefront of (broadband) sample light that travels along the remaining part of the sample arm carries information about the object's vertical position inside the fluidic channel, hence is also referred to as the signal light. More specifically, the signal light experiences different path lengths on the sample arm when individual ones of the objects cross the detection volume at different vertical positions (heights) in the fluidic channel. In consequence, there exists a unique propagation delay of the signal light in the sample arm for each vertical position in the fluidic channel, which is referred to as first delay.

The object localization system further comprises an optical sensing unit configured to combine the reference light received along the reference arm and the sample light received along the sample arm into a spatially distributed interferogram. More specifically, the optical sensing unit comprises a plurality of delay paths that extend between at least one input and a plurality of outputs, and the optical sensing unit is configured to distribute the reference light that is applied to the input into the plurality of delays paths. Associated with each delay path of the optical sensing unit is a corresponding second delay, whereby a plurality of delayed portions of the reference light are obtained at the plurality of outputs. The optical sensing unit is further configured to recombine (interfere) the delayed portion of reference light at each output with the sample light received along the sample arm. Interference sections may be arranged at the respective outputs to that effect. The resulting distribution of optical power as a function of the optical output describes an interference pattern that varies in space (coordinates), viz. the spatially distributed interferogram. A separate detector element can be individually arranged or coupled to each of the plurality of outputs of the optical sensing units. It is noted that the sample light received along the sample arm includes a background signal component and, if an object is present in the detection volume, also includes the signal light component. Moreover, all the wavelength components of the sample light and the respectively delayed portions of the reference light interfere jointly at each of the plurality of outputs of the optical sensing unit and each detector element coupled to a respective one of the outputs receives and detects the joint interference of all wavelength components present in the sample light and the corresponding delayed portion of the reference light.

Each of the plurality of second delays is matched to a unique range of first delays and the plurality of second delays spans the entirety of first delays. This means that if a fictitious reflective surface, e.g. reflective sheet, were present at a fixed vertical position in the fluidic channel, then this reflective surface would be visible as an isolated strong peak in the resulting spatially distributed interferogram, which is centered on one of the second delay values. Hence, an interferogram peak for a given output number of optical sensing unit can be correlated with the unique range of first delays that is associated with the fixed vertical position of the fictitious reflective surface in the fluidic channel. Similarly, an object passing through the detection volume at a particular vertical position gives rise to a prominent signature in a localized region of the spatially distributed interferogram. For extended objects larger than the vertical position resolution of the system, this localized signature usually spreads over several neighboring outputs of the optical sensing unit. Moreover, this signature appears as a temporally evolving surge pattern (interference bursts) on the detector elements as each object moves into, across and out of the detection volume. The objection localization system may adjust an integration time for the detector elements to smooth out fast transitions when objects are moving into and out of the illumination beam or cone. An interferometric background signal, which represents reflective geometrical features of the fluidic channel like interfaces, covers, top and bottom walls detectable in the absence of any object inside the detection volume, can be removed by subtraction from the object signal or by rejection of the dc-components measured by the detector elements.

In some embodiments, the object localization system is configured to detect a prominent or characteristic feature of the interferogram and based thereon, determine the vertical position of the object in the detection volume in respect of which the interferogram was obtained. Landmark features of the spatially distributed interferogram may correspond to the most prominent peak (maximum object signal), the first output of the sensing unit in an ordered number of outputs whose object signal strength exceeds a predetermined threshold value to differentiate it from noise, the spatial distance/frequency between two or more adjacent peaks or oscillation cycles in the interferogram, etc. The output number (output channel) of the sensing unit for which the landmark feature has been detected correlates with the vertical position of the object in the fluidic channel. Determine this vertical position from the retained output number may include retrieving the vertical position value from a look-up table or evaluating a fitted function (e.g. calibration curve) at the output number. Such look-up table or function fits can be provided to the user with respect to a variety of tested objects or can be established upfront by any appropriate calibration methods. A processing unit of the object localization system may be configured to receive the detected optical powers for each output number of the sensing unit and carry out the steps related to the landmark feature detection in the interferogram and to the determination of the vertical object position (accessing the look-up table, evaluating a function fit, etc.).

In other embodiments, a set of reference interferograms (e.g. obtained during calibration or supplied by manufacturer) may be stored in a look-up table alongside with object position data. The processing unit may be configured to compare the recorded interferogram with the set of reference interferograms to determine a best match. The object position data associated with the best matching reference interferogram is then output as the detected vertical object position in the flow channel. Reference interferograms for different object or particle classes may be stored in the loo-up table and the comparison realized with respect to a currently selected class of objects or particles.

In yet other embodiments, the processing unit of the object localization system may be configured to apply the detected optical powers for each output number of the sensing unit as inputs to a pre-trained artificial intelligence model, e.g. regression model, artificial neural network model or deep learning model, which has been trained to correlate interferogram input data to vertical position output data. The pre-trained artificial intelligence model is then capable of accurately predicting the vertical object position inside the flow channel based on its recorded interferogram signature. In embodiments, the artificial intelligence model may include a feature extraction stage which detects and extracts landmark features in each interferogram input that are subsequently used in a position prediction stage.

As these methods do not rely on speckle analysis, no custom-made fluidic channel substrates including strong scattering elements are required. This simplifies the manufacture and cost of the fluidic components of the system and simplifies the complexity of the signal processing and position determination. No (inverse) Fourier transforms need to be calculated and only a single or a few landmark features need to be extracted from the interferogram directly. The transform-free operation greatly increases the signal processing speed and allows for object localization in real-time in high-throughput flow cytometry applications.

In embodiments of the invention, the reference arm and the sample arm can be understood as separate arms of a low-coherence light interferometer configured for performing a single-point depth scan (e.g. A-scan) at the detection volume to reveal the presence of an object. No moving sample stage or mirror in the reference arm is required as the path length matching is performed in space- domain by means of the distribution of delay paths within the optical sensing unit. Expressed in other words, mirror movements for the reference arm have been mapped to space using an array of delay paths. Hence, the sensing unit really expands the initial low-coherence light interferometer into a collection of parallelly operating interferometers by branching out the reference arm within the sensing unit. In that sense, each one of the delay paths within the sensing unit is an extension to the original reference arm that is located outside the sensing unit.

In embodiments of the invention, the optical sensing unit may structurally resemble a spatial heterodyne spectrometer (SHS) - a stationary spectrometer belonging to the class of Fourier-transform spectrometers (the different wavelength components are not from each other before detection by a detector element). The SHS has the effect of tilting wavefronts of a first light beam by a wavenumber-dependent angle about a normal incident direction of a second light beam such that interferences fringes of superimposed first and second light beams can be resolved in space, e.g. by a spatially distributed detector array. However, the output of the SHS in accordance with embodiments of the invention is analyzed directly for landmark features, instead of being inverse Fourier-transformed. Moreover, the SHS in accordance with embodiments of the invention is not used as a conventional spectrometer in the sense that it is being used to gain knowledge of the spectral content of its input signal.

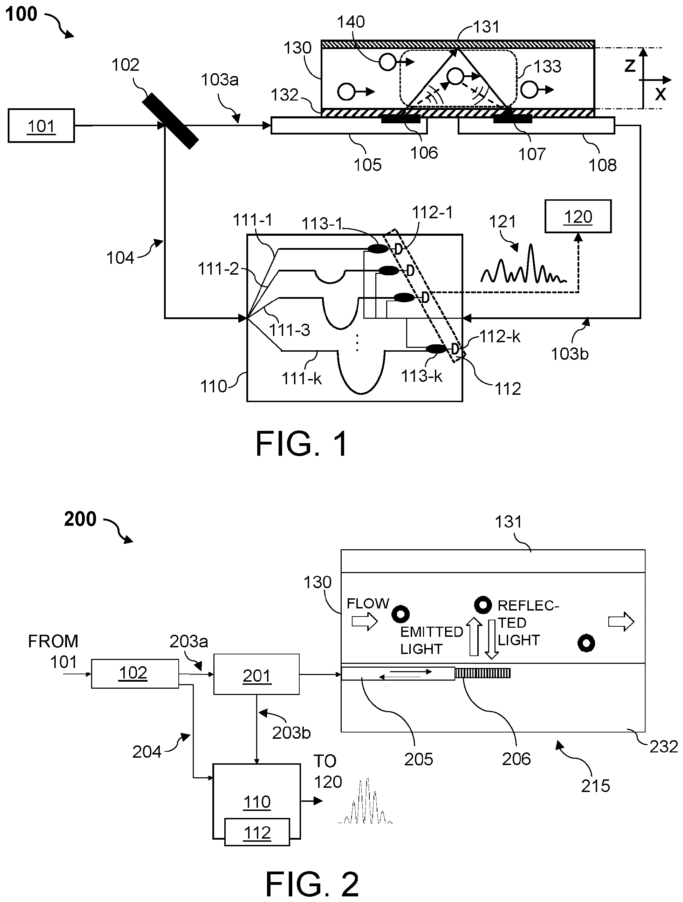

Fig. 1 is a diagram of an object localization system 100 in accordance with a first embodiment of the invention, which is suitable for use in flow cytometry applications. The object localization system includes a fluidic channel 130 adapted to flow objects 140 individually past a detection site or volume 133. The objects are suspended in a carrier fluid that has a flow direction along the longitudinal axis, e.g. X-axis, of the fluidic channel 130. Objects to be localized inside the flow channel may have a refractive index greater than 1.38, providing sufficient refractive index contrast for reliable detection, and have sizes (e.g. diameter or largest dimension) between 0.5 micrometers and 15 micrometers, covering many biological particles of interest, including blood components, bacteria and extracellular vesicles. The carrier fluid may be pure water or a water solution such as phosphate-buffered saline (PBS), which are common carrier fluids for biological particles such as cells selected from lymphocytes, monocytes, or leukocytes with sizes between 6 micrometers and 10 micrometers.

As shown, the vertical position of the objects 140 along the direction of the height of the fluidic channel, e.g. Z-axis, is not controlled at all, or is not very well controlled, as the objects enter detection volume 133. Typical fluidic channel heights in microfluidic delivery system for flow cytometry are between 20 µm and 100 µm. With flow speeds typically reaching 1-10 m/s, microscopic objects like microspheres and blood cells are only illuminated for very short time periods, e.g. 1-10 µsec, on their path through the detection volume. Object alignment along the channel width (e.g. Y-axis perpendicular to the X-axis and Z-axis, not shown) may be achieved by sheath fluids but is not mandatory. The fluidic channel may be a microfluidic channel and may have an easy to form, rectangular cross-section (e.g., efficient fabrication using microelectronics technologies). A base or bottom wall 132 of the fluidic channel 130 is transparent at least in a portion of the fluidic channel that is associated with detection volume 133, thus enabling optical interrogation of the interior of the fluidic channel. A cover or top wall 131 preferably consists of or comprises light-absorbing material in the portion of the fluidic channel that is associated with detection volume 133 to prevent specular reflections and scattering of light off the top wall of the channel and suppress stary light. Nonetheless, transparent or non-absorbing materials of the top wall 131 are not rendering the invention inoperative and can be implemented as well. Cover 131 may be a transparent wafer sealing the flow channel from the top, thus allowing optical access to the particles while maintaining fluidic integrity.

A beamsplitter 102 of object localization system 100 is arranged to receive broadband input light from a broadband light source 101 and divides the broadband input light into sample light on a sample arm 103a, 103b and reference light on a reference arm 104. Appropriate splitting ratios for the beam splitter 102 may range from 10:90 to 90:10, making sure that enough broadband light enters the sample arm on the one hand and to a sufficient signal-to-noise ratio is obtained for the interferogram on the other hand The broadband laser source 101 may be comprised by the object localization system 100 or may be arranged externally. In the latter case, the object localization system 100 comprises an entrance port, input aperture, input coupler, or the like, configured to receive the externally supplied broadband light and supply it to the beam spitter 102. Typical broadband light sources include femtosecond laser sources, supercontinuum sources, collections of superluminescent light emitting diodes (SLEDS) with multiplexed outputs, etc. Spectral bandwidths for the emitted broadband light preferably are in the 100-200 nm range for visible light and in the 100-300nm range for near-infrared light.

The reference arm 104 extends between the beam splitter 102 and an optical sensing unit 110. Parts or all of the reference arm 104 may be provided by light guides such as waveguides formed in a planar photonic integrated circuit. A first part or segment 103a of the sample arm extends between beam splitter 102 and the fluidic channel 130 and is configured to supply the broadband light on the sample arm (sample light) to the detection volume 133. An illumination window may be defined at the bottom wall of the fluidic channel 130 where the first part of the sample arm 103a connects to the channel 130, or the bottom wall 132 of the fluidic channel may be transparent. A second part or segment 103b of the sample arm extends between the fluidic channel 130 and the optical sensing unit 110 and is configured to transmit scattered or reflected broadband light from detection volume 133 to the optical sensing unit 110. A detection window may be defined at the bottom wall of the fluidic channel 130 where the second part of the sample arm 103b connects to the channel 130, or the bottom wall 132 of the fluidic channel may be transparent. Sample arm segments 103a, 103b may be provided - partially or entirely - by light guides 105, 108. Preferably, light guides 105 and 108 are waveguides that are formed in a common substrate of a photonic integrated circuit (PIC) that also includes the sensing unit 110.

In some embodiments a single, uninterrupted light guide may be used instead of two separate light guides 105 and 108. Additional optical components of system 100, such as beam splitter 102 and waveguide implementation of the reference arm 104, may be provided on this PIC, too. The fluidic channel may be formed over or attached to an upper surface of the PIC through which illumination light and collected sample light is travelling. In alternative embodiments, free-space bulk optics or fiber optics are used to guide light along the sample and reference arm.

Illumination optics 106 are arranged at an end portion of the first sample arm segment 103a and configured to deflect or redirect broadband light from the sample arm into detection volume 133 to illuminate individual objects 140 inside the channel 130. A first wavefront is emitted by the illumination optics 106 and penetrates detection volume 133, where a fraction of the first wavefront is reflected or scattered by interaction with objects 140 crossing the detection volume at various positions along the channel height direction. The scattered or reflected fraction of the first wavefront that is propagating towards the beginning portion of the second sample arm segment 103b constitutes a second wavefront. Collection optics 107 are arranged at the beginning of the second sample arm segment 103b to receive the second wavefront and deflect it to continue propagation on the second sample arm part 103b. Hence, a sample path associated with the sample arm 103a-b extends into the interior of the fluidic channel 130 and optical path lengths of second wavefronts (object signal component) reaching the optical sensing unit 110 vary and are dependent on the objects' vertical position in the channel. Likewise, first (optical propagation) delays of scattered or reflected broadband light received along the sample arm are fluctuating over time in accordance with the vertical position of each object that crosses the detection volume. The illumination and collection optics 106, 107 may be optically connected to or integrally formed in the end portion of light guide 105 and the beginning portion of light guide 108, respectively, e.g. as out-of-plane coupling structures such as grating couplers (relative to the plane associated with the bottom wall of the fluidic channel or if present, the PIC substrate). In embodiments, the detection volume may be defined by the intersection of the illuminated channel volume, which receives light from the illumination optics, and the detected channel volume, from which the collection optics collects light.

The illumination optics may comprise an optical emitter that is a diffraction grating, e.g. a linear or apodised diffraction grating. This emitter may be configured to illuminate the particles across the width of the flow channel, ensuring all particles are detected regardless of their lateral position. For instance, the emitter may have a width between 40 micrometers and 90 micrometers for a flow channel width between 50 micrometers and 100 micrometers, providing good coverage of the channel cross-section. The emitter may be configured to emit a first wavefront of broadband light for object illumination that is narrow in the direction of flow to provide spatial resolution sufficient to distinguish between particles moving closely together, improving the particle detection accuracy. The emitter may be designed to emit light with a single polarization, e.g. either transverse electric (TE) or transverse magnetic (TM). Furthermore, the illumination optics, e.g. the emitter thereof, may be configured to provide uniform illumination across the width of the flow channel, reducing dependence of the signal on the lateral particle position. The emitter of the illumination optics may be configured to emit light within an angular range of 10 degrees to 20 degrees due to the dispersive nature of the grating, providing a good trade-off between illumination uniformity and collection efficiency. The system 100 may be configured to optimize the dispersion of the lightguide-emitter combination to minimize time-dependent illumination effects, improving the consistency of the object signals.

The optical sensing unit 110 includes a first input for receiving the sample light on sample arm 103a-b, a second input for receiving the reference light on reference arm 104, a plurality of interference sections 113-1 to 113-k, and a plurality of delay arms 111-1 to 111-k of increasing path lengths (delay paths). Each of the k delay arms is connected between the first input and a respective one of the interference section 113 to 113-k such that impinging reference light is distributed into the plurality of delay arms 111a-k. For instance, the amplitude of the reference light is equally divided into the plurality of delay arms. The path lengths of the individual delay arms may be linearly increasing, with constant increments typically ranging between 0.5 µm and 5.0 µm, or the increments per unit height of the fluidic channel may be 0.5 µm⁻¹. Each delay arm is matched in path length with a distinct path length range of the sample light on the sample arm. Therefore, each delay arm 111-1 to 111-k uniquely correlates with one of k distinct vertical position intervals along the fluidic channel height axis Z. This also means that a distinct second delay applied by each one of the plurality of delay arms to the distributed portion of the reference light matches one of k distinct intervals of first delays. The minimum second delay applied by the shortest one of the delay arms/paths 111-a to 111-k, e.g. delay path 111-1, matches the shortest interval of first delays of sample light scattered or reflected in the detection volume of the fluidic channel, and a maximum second delay applied by the longest one of the delay arms/paths 111-a to 111-k, e.g. delay path 111-k, matches the longest interval of first delays of sample light scattered or reflected in the detection volume of the fluidic channel. Here, matching delay paths of the multi-arm optical sensing unit with a path length interval of the sample arm generally means matching within the coherence length associated with the broadband light, and matching second delays of the delay paths of the optical sensing unit with first delays on the sample arm generally means matching within the coherence time associated with the broadband light. The number of delay arms and associated second delays, k, may be k = 4...400, preferably k = 4...40, e.g. k = 5...40, e.g. k = 10...20. Optical sensing unit 110 is preferably implemented as a planar photonic integrated circuit, e.g. on the same photonic chip as the waveguide-integrated portions 105, 108 of the sample path, and delay arms of the optical sensing unit may be formed as an array of waveguides of the planar photonic integrated circuit that have increasing optical path lengths.

The optical sensing unit 110 is further configured to distribute sample light received at the second input to each interference section 113-1 to 113-k. Preferably, the sample light amplitude is split equally among the plurality of interference sections. Each interference section 113-1 to 113-k is configured to recombine and superimpose (interfere) one of the distributed portions of the sample light from the sample arm with the delayed portion of reference light supplied by the connected delay arm. For instance, a first portion of the sample light interferes with the delayed portion of reference light from delay arm 111-1 in interference section 113-1, a second portion of the sample light interferes with the delayed portion of the reference light from delay arm 111-2 in interference section 113-2, and so forth. In embodiments of the invention, the interference sections may be provided as beam combiners, coupling sections, multimode interference sections, etc.

The spatial distribution of the delay arms and corresponding interference sections causes the formation of a spatially distributed interferogram at the exit ports of the plurality of interference sections. Detector elements 112-1 to 112-k of a detector unit 112 are in optical communication with the exit ports of the interference sections 113-1 to 113-k to detect the interference pattern (interferogram) in the space domain. The produced interferogram is unique for each vertical position of the object within the flow channel, thereby enabling unambiguous determination of the object positions. Each detector element is configured to receive a portion of the interferogram that is generated at the exit port of the corresponding interference section in response to the specific second delay of the corresponding delay arm of the optical sensing unit 110. Moreover, each detector element is sensitive to radiation in a spectral region that comprises the broadband light on the sample and reference arm. Preferably, the optical sensing unit 110 is implemented as a planar photonic integrated circuit, e.g. the same photonic integrated circuit in which the light guides 105 and 108 are formed. Detector element 112-1 to 112-k may be co-integrated with the optical sensing unit 110 to obtain an on-chip detector 112. Alternatively, detector elements 112a-k may be distinct sensitive areas, e.g. pixels, of an externally arranged imaging device, e.g. CMOS or CCD imager. The detector unit 112 preferably registers the interferograms with a sampling rate sufficient to detect objects, e.g. particles, cells or cell components, moving at speeds of 1 meter per second to 10 meters per second and illuminated for durations of 1 microsecond to 10 microseconds. These specifications match the requirements for high-speed flow cytometry. In some embodiments, each detector element 112-1 to 112-k may comprise a pair of balanced photodetectors to achieve common mode rejection. In this case, each photodetector of the pair of balanced photodetectors comprised by each detector element 112-1 to 112-k is optically coupled to a respective one of at least two exit ports of the corresponding interference sections 113-1 to 113-k, where the distributed portion of the sample light from the sample arm is superimposed with the delayed portion of the reference light.

Processing unit 120 of the object localization system 100 receives the detected interferogram 121 from detector 112 and is configured to extract landmark features from the interferogram information and determine, retrieve or correlate a vertical position in the fluidic channel based on the extracted landmark features. Depending on the calibration method used for the particular type of detectable objects in the flow channel, the so determined vertical position may correspond to a first scattering or reflective surface or boundary of the detected object, the center of mass of the detected object, the refractive index barycenter of the detected object, etc. The obtained vertical position may correspond to mid-interval point of the plurality of vertical position intervals along the height axis of the flow channel, but this is not required. For instance, multiple landmark features may be detected to improve the accuracy and resolution limit for the vertical object position by means of interpolation. Processing unit 120 of the system 100 may be a CPU, GPU, FPGA or other suitable signal processors. A dedicated hardware processing unit 120 may be implemented on-chip, e.g. the same photonic chip that comprises the sensing unit 110 and/or detector 112, which has the additional advantage of providing an all-integrated system-on-a-chip solution. Preferably, the processor unit 120 processes individual interferograms and correlates them to a vertical position in the flow channel at rates sufficient to detect particles moving at speeds of 1 meter per second to 10 meters per second, corresponding to event durations of 1 microsecond to 10 microseconds. High-speed processing may be necessary to keep up with the particle flow rates. The processor may be configured to subtract background data acquired with no objects in the flow channel from the detected interferograms, thus improving the signal-to-noise ratio.

Although not shown in the present embodiment, the dispersion-compensated light guides or dispersion compensating elements may be arranged on the reference arm, the sample arm, or both. Similarly, polarization of the broadband light in the sample arm and reference arm may be controlled by polarization controllers, the beam splitter, the polarization characteristics of light guides arranged on these arms, etc.

Fig. 2 is a diagram of an object localization system 200 in accordance with a second embodiment. Light from a broadband light source 101 is split into a sample arm 203a-b and a reference arm 204 by a beam splitter 102, e.g. a 1x2 splitter. The illumination optics and collection optics on the sample arm 203a-b are provided by a single emitter-receiver element 206, e.g. an out-of-plane coupling structure such as a vertical grating coupler, which is formed into or adjacent to an end portion of a planar waveguide 205 of a photonic integrated circuit (PIC) arranged on a photonic chip 215. The microfluidic channel 130 with top cover 131 and wall-forming bottom substrate 232 is co-integrated with the photonic chip and overlays the emitter-receiver element 206. This leads to a compact and alignment-free system. The bottom substrate of the microfluidic channel 130 corresponds to the substrate of the photonic chip 215 in which the integrated PIC is defined. Preferably, the emitter-receiver element 206 couples broadband light on the sample arm perpendicularly or at near 90° angles into and out of the microfluidic channel 130, thus benefiting from the relatively strong retroreflected or backscattered object signal. Alternatively, the emitter-receiver element 206 may be configured to couple broadband light at different angles with respect to the plane of the PIC and waveguide 205, e.g. between 45° and 90°, and broadband light scattered along different directions, deviating from the 180° scatter angle, is collected back into the waveguide 205.

In the present embodiment, the first segment 203a and the second segment 203b of the sample arm are partially overlapping in a common-path region. The reflected or scattered wavefront of broadband light is returned along the same waveguide 205 that is used for supplying the illuminating wavefront of broadband light to the detection volume of the microfluidic channel. An optical circulator 201 is arranged on the sample path and configured to separate the broadband light for object illumination from the scattered or reflected broadband light returned from the microfluidic channel 130 along the sample path. The circulator 210 then routes the reflected or scattered broadband light on the sample arm to the optical sensing unit 110, which combines it with the broadband light on the reference arm to produce the spatially distributed interferogram. This interferometric pattern is detected by detector 112, which is connected to a processor or processing unit 120 (not shown) for further analysis.

Providing the same waveguide 205 and the same emitter-receiver element 206 to guide, redirect and couple both the wavefronts of broadband light used for illumination of the objects in the detection volume and for carrying the object's response signal has the advantage of achieving more compact and dense PICs for co-integration with fluidic channels in flow cytometry systems. It also eliminates the need for accurate alignment between the illumination optics, the fluidic channel and the collection optics.

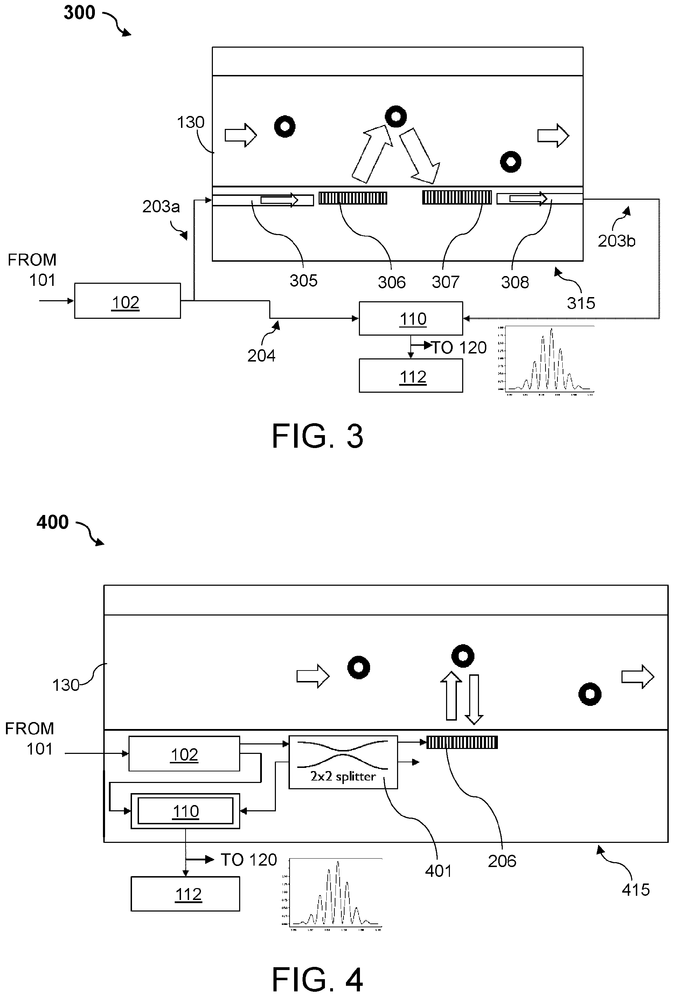

Referring to Fig. 3, an object localization system 300 for flow cytometry applications according to a third embodiment of the invention is shown. Contrary to object localization system 200 of Fig. 2, the first and second segment 203a, 203b of the sample path in object localization system 300 are physically separated, non-overlapping optical paths. Hence, no optical isolator is needed. Moreover, the illumination optics and collection optics are implemented separately from each other: the illumination optics consisting of or comprising an emitter element 306 is arranged adjacent to the collection optics consisting of or comprising a receiving element 307. Emitter element 306 is located upstream of the receiver element 307 on the sample arm. Both the emitter element 306 and the receiver element 307 are parts of a planar PIC 315 and may include out-of-plane coupling structures such as vertical grating couplers. The emitter and receiver elements may be designed to operate with different polarizations, which may help reduce crosstalk and background signals. The microfluidic channel 310 is illuminated by broadband light leaving the emitter element 306, the emitted broadband light constitutes a first wavefront (upward thick arrow) that interacts with the particles, and the reflected or scattered broadband light from the objects in the detection volume constitutes a second wavefront (downward thick arrow) that is collected by the separate receiver element 307. The emitter and receiver element are connected to respective waveguides 305 and 308 of the planar PIC 315. A portion of PIC's top layer may form a bottom wall of the flow channel 130 and be in direct contact with the carrier fluid. A receiver element that is provided separately from the emitter element enhances the efficiency of light collection from within the detection volume and improves the signal-to-noise ratio of the detected interferogram.

Fig. 4 illustrates an object localization system 400 for flow cytometry applications according to a fourth embodiment of the invention. The object localization system 400 is a variant of the object localization system 200 according to the second embodiment, in which the beam splitter component 102, the emitter-receiver element 206 and the optical sensing unit 110 are all integrated on the same photonic substrate 415. This configuration utilizes more integrated optics to further eliminate the need for bulk optical components and alignment. The broadband light from source 101 is split on-chip into sample and reference arms. A further beam splitter 401, instead of an optical circulator, directs the sample light towards the fluidic channel 130 and separates it from the scattered or reflected broadband light on the sample path that is returned from the fluidic channel. The sample and reference arms are entirely formed in the photonic substrate and do not include any free-space optics. The beam splitter 102, the 2x2 splitter 401, the emitter-receiver element 206 and the multi-interferometer-based sensing unit 110 are optically connected components of a planar PIC formed in the photonic substrate 415 and overlaid by the flow channel 130. The detector unit 112 is optically coupled to the exit ports of the sensing unit 110. Although shown external to PIC 415 in the present embodiment, the detector unit 112 can be integrated on the same photonic chip as PIC 415 in accordance with alternative embodiments.

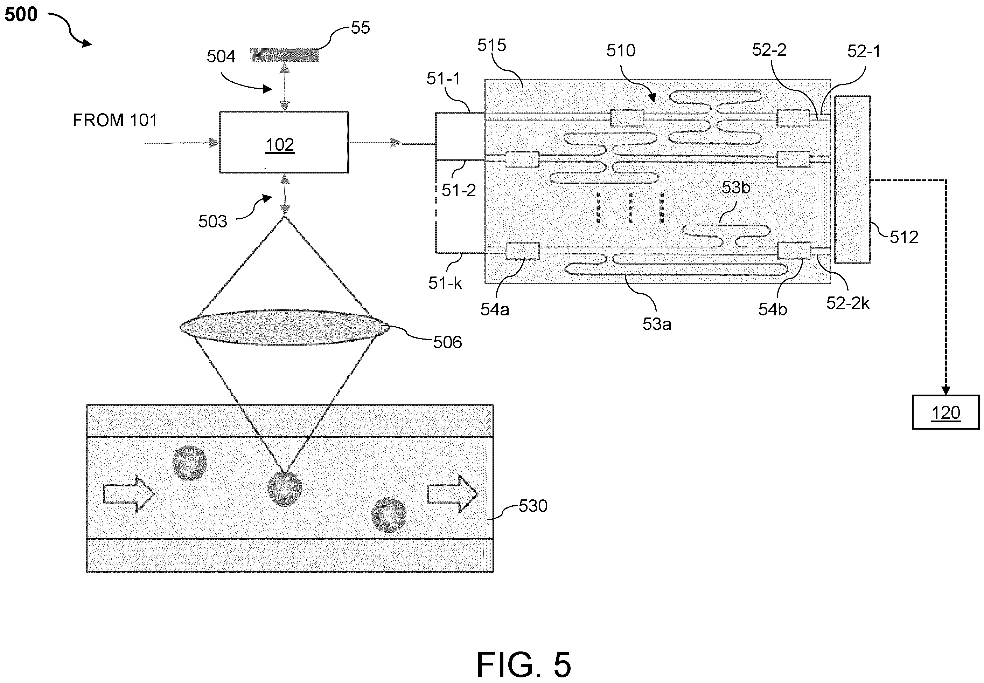

Fig. 5 illustrates an object localization system 500 for flow cytometry applications according to a fifth embodiment of the invention. The object localization system 500 differs from the previous embodiments in that a single microscopy objective or bulk optics lens 506 is used as the illumination optics and collection optics. Light on sample arm is focused or shaped by microscopy objective or bulk optics lens 506 to form a light spot, stripe or sheet that intersects the fluidic channel 530 at the detection volume to illuminate (e.g., through the top wall or bottom wall of the fluidic channel) the objects passing through the same. The broadband light interacts with the objects crossing the fluidic channel in the detection region and the scattered or reflected fraction of broadband light is collected by the microscopy objective or bulk optics lens 506 and sent back on the sample arm 503. Furthermore, a reference mirror or reflective surface 55 is arranged on reference arm 504. Light received along the reference arm and along the sample arm is thus superimposed on the same beam splitter 102 that is used to split the original beam of broadband light into the sample arm and the reference arm.

The superposition of light from the reference and sample arm is then distributed to the input ports 51-1, 51-2, ..., 51-k of a photonic integrated optical sensing unit 510. This distribution of the recombined light may be performed off-chip, e.g. using free-space optics or fiber optics components, or on-chip, e.g. using beam splitter networks and/or beam splitters with a large fan-out. A detector array 512 is coupled to the exit ports 52-1, 52-2, ..., 52-2k of sensing unit 510 to capture the spatially distributed interferogram.

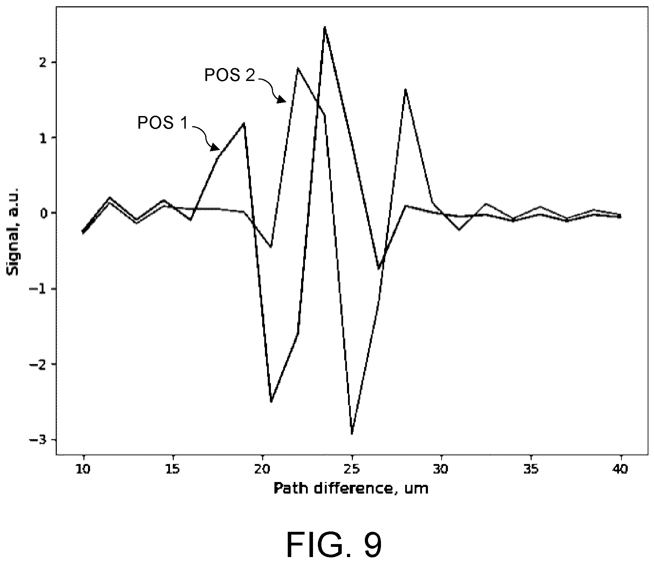

Simulated interferograms labelled 'POS 1' and 'POS 2' obtained by object localization system 500 in response to two distinct positions of the reference mirror (15 µm and 17 µm, respectively) on the reference arm and no objects in the fluidic channel are shown in Fig. 9 for a sensing unit having k = 21 interferometric detection channels. The path length differences between the interferometric arms in each detection channel of the sensing unit are equally spaced in range from 10 µm to 40 µm, using a 1.5 µm step size per interferometer. In this example, the interferometric detection channels are implemented in a silicon nitride platform and the broadband light is centered at 850 nm and has a bandwidth of 100 nm. The spatially distributed interferograms are plotted as a function of the path length difference in each detection channel and corresponds to the response signal of k = 21 pairs of balanced photodetectors after rejection of the common mode (dc signal). Shifts in the onset or the peak location (e.g. absolute maximum data point or absolute maximum of fitted envelop) of each interferogram can be correlated with shifts in the position of reference mirror. Once the reference mirror position is fixed, vertical position variations in the presence of objects in the fluidic channel will cause similar shifts in the onset or the peak location of the detected interferograms.

In the present embodiment, the optical sensing unit 510 comprises spatial heterodyne spectrometer (SHS) that is formed as a planar PIC in a photonic substrate 515. The SHS consists of an array of interferometers with varying optical path differences which correlate with objects reflecting or scattering sample light at different vertical positions inside the fluidic channel 530. Integrated interferometers are a compact and stable implementation. Each interferometer of the SHS can be called a detection channel of the optical sensing unit. A Mach-Zehnder-type interferometer in each detection channel may be composed of a lower waveguide 53a being a first interferometric arm and an upper waveguide 53b being a second interferometric arm 53b, a first multi-mode interference (MMI) coupler connected to beginning portions of the lower and upper waveguide to divide the broadband light to be sensed in that detection channel into the upper and lower waveguide, and a second MMI coupler connected to end portions of the lower and upper waveguide to recombine the broadband light from the upper and lower waveguide. Therefore, the second MMI couplers of the optical sensing unit 510 acts as interference sections. Each interferometer of each detection channel of the SHS has a unique optical path difference and the optical path length difference between the lower and upper arm waveguide varies incrementally between detection channels, whereby a unique and spatially distributed interferogram is generated at the outputs 52-1, 52-2, ..., 52-2k. This configuration enables determination of the vertical positions of objects based on the distribution of light across the detector array, corresponding uniquely to vertical object positions within the flow channel. The interferometer array may include 10 to 20 elements per 10 micrometers of detection range, providing a good compromise between vertical resolution and signal strength. It is noted that both the reference light and the sample light can be simultaneously injected into the first interferometric arm and the second interferometric arm of each SHS interferometer, since only cross-terms involving delayed portions of the reference light will contribute to the non-static (ac) components of the spatially distributed interferogram. Any cross-term involving further delayed portions of the sample light lacks delay path matching and will not constructively interfere with the corresponding portion of non-delayed reference. Hence, the SHS interferometers are configured to apply an optical delay at least to a fraction of the received portions of reference light but may additionally delay a fraction of the received sample light.

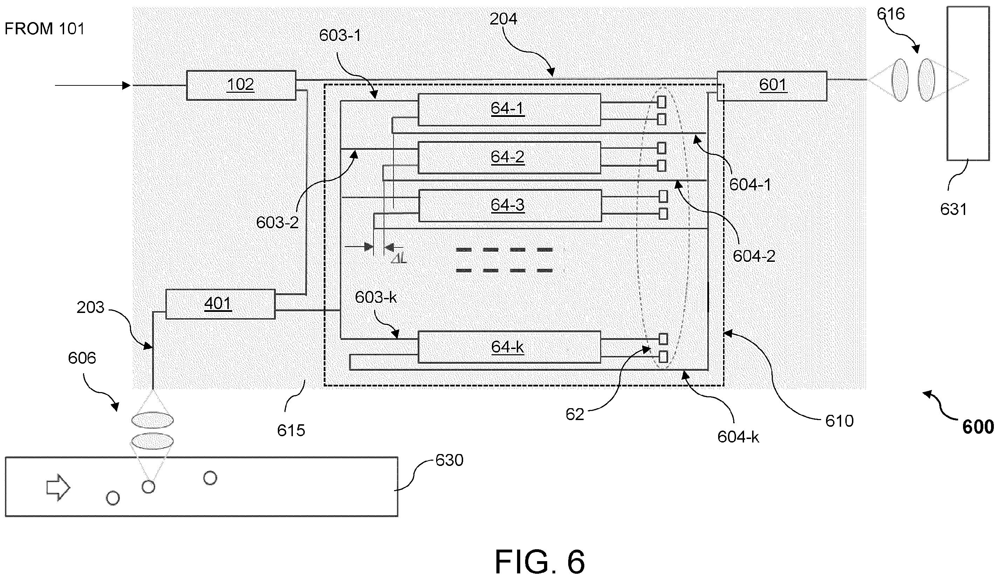

Fig. 6 illustrates an object localization system 600 for flow cytometry applications according to a sixth embodiment of the invention. Object localization system 600 resembles the object localization system 400 of the fourth embodiment in that beam splitter 102, 401 and optical sensing unit 610 are all implemented as components of a planar PIC formed in the photonic substrate 615 but differs in the separately arranged fluidic channel 630 and the coupling of broadband light on the sample and reference arm to bulk lens systems 606, 616 in corresponding free-space regions along sample and reference arm. Lens system 606, e.g. a microscopy objective, is used as illumination optics and collection optics; light on sample arm is focused or shaped by lens system 606 to form a light spot, stripe or sheet that intersects the fluidic channel 630 at the detection volume to illuminate (e.g., through the top wall or bottom wall of the fluidic channel) the objects passing through the same. The broadband light interacts with the objects crossing the fluidic channel in the detection region and the scattered or reflected fraction of broadband light is collected by lens system 606 and returned on the sample arm. Furthermore, lens system 616, e.g. a microscopy objective, is arranged in a free-space region of the reference arm between the photonic substrate 615 and a reference flow channel portion 631 and is configured to illuminate and collect reflected light from the reference flow channel portion 631 similarly to the lens system 606 on the sample arm. That is, light on sample arm is focused or shaped by lens system 616 to form a light spot, stripe or sheet that intersects the reference channel 631 to illuminate (e.g., through the top wall or bottom wall of the fluidic channel) a reference volume akin the detection volume. A further beam splitter 601, e.g. 2x2 splitter, is arranged on the reference arm to separate the broadband light on the reference arm that is directed to the reference flow channel portion 631 from the reflected broadband light that the lens system 616 is returning along the reference arm. This further beam splitter 601 may be provided as a component of the planar PIC.

The same carrier fluid may be flown through the fluidic channel 630 and an identically formed reference channel 631 to ensure nearly identical background signals, which can be rejected by balanced photodetector pairs. In specific embodiments, the reference flow channel portion 631 may correspond to a portion of the original fluidic channel 630 that is arranged distantly to the detection volume and not accessible to objects. For instance, the reference flow channel portion 631 may correspond to a volume of fluidic channel 630 that is located upstream an object inlet or downstream an object outlet. Having nearly equal designs for the sample arm and the reference arm helps balancing the optical path lengths of both arms in the absence of any objects in the fluidic channel 630 and minimizes dispersion mismatches.

Balanced or nearly balanced optical paths along the reference and sample arm in the absence of objects have the benefit of more efficiently using the available scan depth, i.e., the range in which vertical object positions are detectable and uniquely determined. An output of the optical sensing unit 610 that is associated with the strongest dc component in at least one of its connected photodetectors can be used to identify a balanced condition for the optical paths on the sample and reference arm (matched optical path lengths). Moreover, a virtual reference point or along or virtual reference plane perpendicular to the height direction of the fluidic channel can be defined at the detection volume by correlating it to the output of the optical sensing unit for which the balanced condition has been obtained. For instance, the virtual reference plane may correspond to a bottom wall, the top wall or the center plane of the fluidic channel so that vertical positions of objects passing through the fluidic channel are measurable deviations (vertical displacements) relative to this virtual reference plane. Means for adjusting the optical path length on the sample and/or reference arm, such as a phase modulator, can be provided to gain control over the output of the sensing unit for which the balancing condition is fulfilled. For instance, the balancing condition is achieved with respect to the first output of the optical sensing unit (shortest delay path/arm) such that the virtual reference plane is correlated with the flow channel wall through which the broadband light for illumination enters the detection volume. Or the balancing condition is achieved with respect to the last output of the optical sensing unit (longest delay path/arm) such that the virtual reference plane is correlated with the flow channel wall opposite to the wall through which the broadband light for illumination enters the detection volume. Alternatively, the balancing condition is achieved with respect to one of the intermediate outputs of the optical sensing unit, between the first and the last output, such that the virtual reference plane is correlated with a virtual reference plane in the flow channel, perpendicular to the height direction of the channel, which is located between the boundaries (e.g. bottom and top wall) that delimit the flow channel along the height axis.

The spatially distributed interferogram is generated at the output connecters 62 (e.g. output couplers) of the optical sensing unit 610. This distribution of light at the outputs 62 of the sensing unit 610 is unique for each vertical position of the object in the channel. Registering information from the individual outputs 62 using a detector array, one can define the vertical position of the object inside the fluidic channel 630. In the present embodiment, the optical sensing unit 610 has separate input connectors for the broadband light received along the sample arm and the broadband light received along the reference arm. The recombination and interference of broadband light received along the reference and sample arm is solely performed by the interference sections 64-1 through 64-k, inside the optical sensing unit 610. To this end, the optical sensing unit 610 comprises means for dividing and distributing (e.g. splitter network and/or large fan-out beam splitters) each of the sample light received from the sample arm and the reference light received from the reference arm to each of the plurality of interference sections 64-1 to 64-k. The sample light on the sample arm is delayed by a first optical delay that depends on the vertical position of the (partially) reflective and/or scattering object in the fluidic channel. A plurality of delay arms and associated path delays are arranged internally in the optical sensing unit 610 such that each of the portions of the divided reference light is delayed by a respective second optical delay. That is, the optical sensing unit of the present embodiment uses device-dependent spatial reference delays. Incrementing the optical path length difference between successive delay arms by an amount ΔL, the second optical delays are increasing over the array of delay arms. In embodiments, the increment ΔL is typically inverse to the optical bandwidth of the light source that is generating the broadband light. Each second optical delay is matched with a distinct range of first optical delays along the sample arm. Each interference section 64-1 to 64-k (e.g., a Y-junction, a 2x1 or 2x2 coupling structure such as an MMI section, a directional coupler) is configured to superimpose the received sample light with a respective one of the delayed portions of the received reference light.

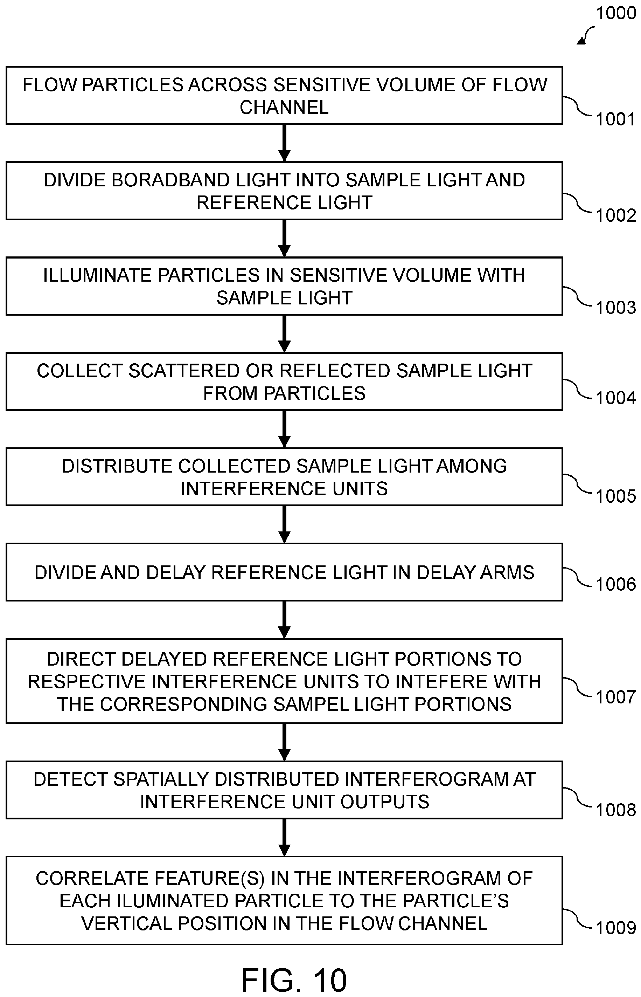

In the present embodiment, the overall path for the reference light is branched out and each branch, associated with one of the detection channels of the sensing unit 610, can be sought of being composed of: (i) an external portion 204 of the reference path that is located outside the optical sensing unit 610 and common to all branches (the reference arm external to the sensing unit), and (ii) an internal portion 604-1, ..., 604-k of the reference path that is located inside the optical sensing unit and which is branch-specific (comprising one of the delay arms). Similarly, the overall path for the sample light is branched out and each branch, associated with one of the detection channels of the sensing unit 610, can be sought of being composed of: (iii) an external portion 203 of the sample path that is located outside the optical sensing unit 610 and common to all branches (the sample arm external to the sensing unit), and (iv) an internal portion 603-1, ..., 603-k of the sample path that is located inside the optical sensing unit but which is not specific to particular branches. Contrary to internal portions (ii) of branches related to the overall reference path, the internal portions (iv) of branches related to the overall sample path are lacking the additional delay paths, which are multiples of ΔL. Pairs of branches related to the reference and sample path are terminated in respective ones of the interference sections 64-1 to 64-k, where the broadband light propagating along the different paths interferes. For instance, a first branch 603-1 of the sample path exists internally to the sensing unit 610 and is joined in a first interference section 64-1 with a first branch 604-1 of the reference path that also exists internally to the sensing unit 610, a second branch 603-2 of the sample path exists internally to the sensing unit 610 and is joined in a second interference section 64-2 with a second branch 604-2 of the reference path that also exists internally to the sensing unit 610, and so forth. The common sections of the sample and reference arms 203, 204 outside the sensing unit 610 and each branch pair 603-i, 604-i inside the sensing unit, where i = 1 through k, together form a distinct Mach-Zehnder interferometer (MZI) that has a unique delay along the reference path and the detection volume arranged on the sample path. Therefore, the object localization system 600 can be said to include a set of nested MZIs with increasing reference path lengths, resembling the structure illustrated in Fig. 10 of document US 10914634 B2 (Avci [NL]), 9 February 2021. Contrary to the latter document, which provides for MZIs that can be activated and deactivated on an individual basis, the MZIs of the present embodiment are not selectively switchable and broadband light of the sample and reference path is supplied to each interference section 64-1 to 64-k in parallel to obtain a one-shot recording of the distributed interferogram. That is, the MZIs of the set of nested MZls are operated in parallel. Scanning the different MZIs sequentially, on at the time, would require a total scan time too long to be compatible with the fast flow speeds and short illumination times of objects crossing the detection volume. Moreover, the absence of controlled switches in the set of MZIs simplifies the control and the complexity of the system (scanless system) and allows for cheaper and less power consuming passive implementations of the optical sensing unit. In the present embodiments, the set of nested MZIs functions like an SHS in which the wavenumber-dependent tilt angle of wavefronts related to the reference path and the resulting interference fringe (spatial frequency component) contribution to the interferogram are determined by the delay paths increments. Fluctuations in the sample path lengths due to one or more reflections at different flow channel depths translate into shifts of the spatial fringe patterns contributing to the interferogram. Unlike conventional SHS or time-domain OCT, the computation of a reflectivity profile from the recorded interferogram using Fourier-transform and/or deconvolution algorithms is not required in order to determine a good estimate of the vertical object position in the flow channel.

A hybrid approach high-quality bulk optical components while still leveraging the benefits of chip-scale integration provides a good test bed for different channel design, light sources, optical sensing unit designs, and integration methods for fluidic subsystems with planar PICs. It also facilitates fast prototyping and characterization of the interferogram signal shapes and strengths as a function of the object size, shape and flow speed, which is valuable input for the choice of the position determination algorithm that is executed by the processing unit and related calibration strategies.

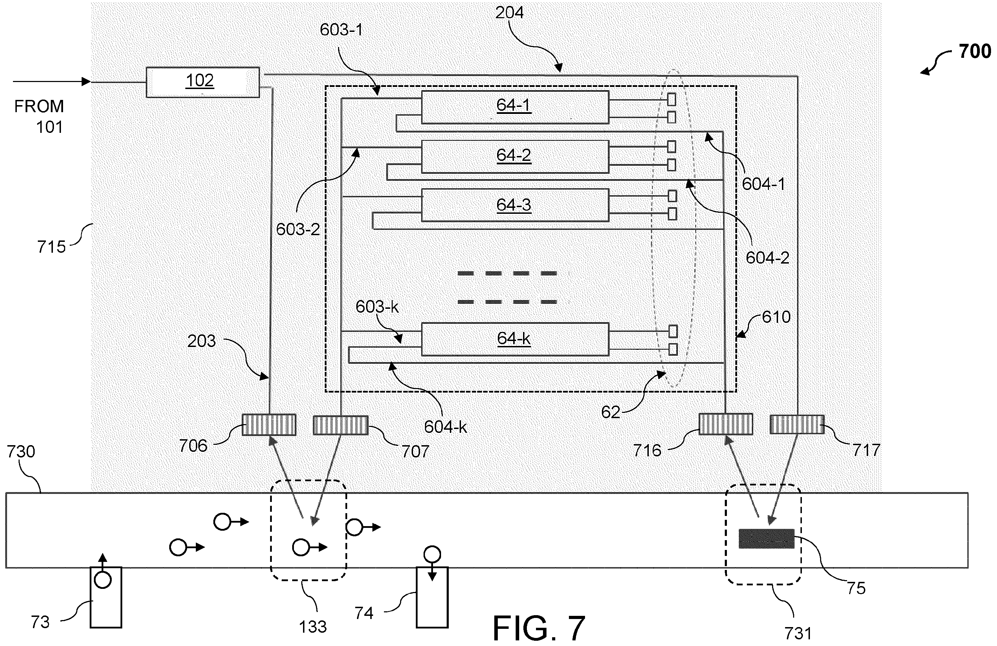

Fig. 7 illustrates an object localization system 700 for flow cytometry applications according to a seventh embodiment of the invention. Object localization system 700 is a more compact variant of object localization system 600 according to the sixth embodiment, in which integrated emitter and receiver elements on the reference and sample arm are replacing the lens systems in the free-space regions. This enables direct integration of the PIC with the flow channel comprising fluidic system or subsystem, suitable for lab-on-a-chip solutions. More specifically, integrated emitter element 706 and integrated receiver element 716 are arranged on the sample arm 203 to replace lens system 606 and act as the illumination optics and the collection optics for the sample path, respectively. Likewise, integrated emitter element 716 and integrated receiver element 717 are arranged on the reference arm 204 to replace lens system 616 and act as the illumination optics and the collection optics for the reference path, respectively. The integrated emitter and receiver elements are part of the planar PIC that is formed in the photonic substrate 715 and may be formed as diffraction gratings, e.g. vertical grating couplers. Furthermore, a reference portion 731 of the flow channel 730, which is inaccessible to objects but preferably contains the carrier fluid, contains a reflective target (surface) 75 such as a mirror element that defines a virtual reference plane at a predetermined position along the flow channel height, e.g. at channel mid-height position. Object inlet 73 and object outlet 74 are connected to the flow channel 730 at opposite sides of the detection volume 133.

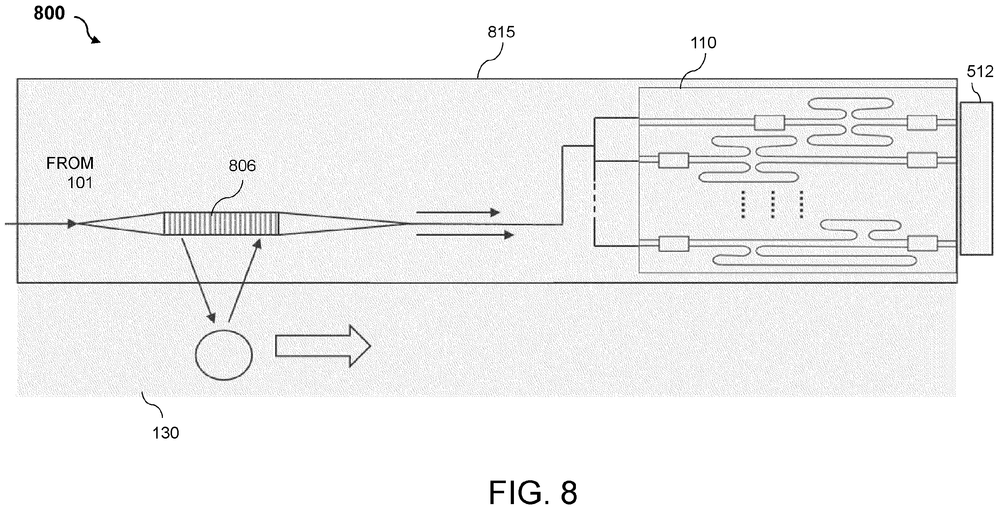

Fig. 8 shows an object localization system 800 for flow cytometry applications according to an eighth embodiment of the invention. In this embodiment, the photonic substrate 815 includes a planar PIC in which the illumination and collection optics on the sample arm are combined into a single emitter-receiver structure 806, e.g. an out-of-plane grating coupler, which is further configured to transmit a fraction of the light supplied by the broadband source 101, thus acting like a beam splitter. The transmitted fraction of the received broadband light corresponds to the reference light travelling along the reference path while the deflected fraction of the received broadband light interacts with the objects in the fluidic channel underneath the photonic substrate 815 and corresponds to the sample light travelling along the sample path. The emitter-receiver structure 806 also recombines the scattered or reflected sample light with the transmitted reference light. The superimposed sample and reference light are then directed to the sensing unit 110. Hence, the sample arm and the reference arm of the present embodiment have a common-path configuration. It is an advantage of the present embodiment that the object localization system requires less beam splitter and beam combiner components.

The skilled person may contemplate further variations of the above-described embodiments. For instance, optical sensing units of object localization systems in accordance with embodiment of the present invention may benefit from the balanced detection of the spatially distributed interferogram when two arrays of interferometers are connected to the respective outputs of an interference section or unit which is configured to recombine the light from sample and reference arms. This, in fact, generates two versions of the spatially distributed interferogram, one for each array of interferometers of the optical sensing unit, such that sum and difference signals can be obtained upon detection of the two interferograms by the respective photodetector array. Combining the detected ac signals of two separately generated interferograms allows for increased detection sensitivity and noise suppression through common mode rejection, thereby enhancing the signal-to-noise ratio when determining the object's vertical position. By way of example, light from the sample and reference arms may interfere at a 2x2 splitter, producing two output signals. These output signals may each be connected to separate arrays of Mach-Zehnder interferometers integrated on-chip. The arrays of interferometers may then process the corresponding output signal from the 2x2 splitter to generate the two versions of the interferogram.

In another aspect, the present invention relates to a method for determining vertical positions of particles within a flow channel for use in flow cytometry application.

With reference to Fig. 10, steps of a method 1000 according to an embodiment of the invention are explained. In step 1001, particles suspended in a carrier fluid are flown through a flow channel and across a sensitive portion thereof (detection volume). Next, light of a broadband source is divided into sample light on a sample arm and reference light on a reference arm during step 1002. The sample and reference arms have associated sample and reference paths. The particles within the flow channel that are crossing the detection volume are illuminated with broadband light in step 1003. Sample light scattered or reflected from individual particles in the flow channel is then collected back into the sample arm in step 1004. Particles crossing the detection volume at different vertical positions inside the flow channel cause variations in the sample path length for the sample light when reflected or scattered from the particles. This is equivalent to introducing a first optical delay along the sample arm which depends on the vertical position of the particle illuminated by the sample light. The scattered or reflected portion of the sample light that is collected back into the sample arm is subjected to this first optical delay, i.e. is delayed according to the first optical delay. Next, the collected sample light on the sample arm is distributed among a plurality of interference units in step 1005. The reference light, in turn, is further divided into a plurality of optical delay arms in step 1006, thus obtaining a plurality of delayed portions of the reference light. The delay arms may be branches connected to one end of the reference arm, or the reference arm may include or be extended by the delay arms. Each of the plurality of delayed portions of the reference light is then directed to a respective one of the plurality of interference units in step 1007, where the delayed portion of the reference light is recombined to interfere with a corresponding portion of the sample light. A spatially distributed interference pattern, the interferogram, emerges at the outputs of the interference units because of the different superimpositions of the sample light and the delayed portions of the reference light. A plurality of photodetectors, respectively coupled to the outputs of the interference units and responsive to the broadband light, are detecting the spatially distributed interferogram as a function of the output number (position of the output in the array of interference units) in step 1008. Detecting the interferogram may comprise detecting the ac component and rejecting the dc component of the photosignals supplied by the photodetectors in response to their illumination with the spatially distributed interference pattern. In the following step 1009, a processor is configured to determine at least one landmark feature from the interferogram and correlate the output number where the at least one landmark feature was found with a vertical position or position range in the flow channel. This correlation may include but is not limited to retrieving the vertical position or position range from a previously obtained look-up table at the identified output number or evaluating a fitted model (function) at the identified output number. The particle that caused the interferogram is thus detected and localized at the flow channel depth represented by the vertical position or position range. Landmark features may include the onset of the interferogram where it first exceeds a predetermined threshold value (e.g. above the noise level), the location of at least one local peak or the location of the maximum peak in the interferogram signal, the location of the maximum on the envelop of the interferogram signal, the location of one or more zero-crossings in the interferogram signal (e.g., representative of the spatial frequency of the carrier signal component in the interferogram signal), etc. Using more than one landmark feature (optionally weighted) for the subsequent correlation step (e.g. regression step) with multiple input arguments may result in a more robust and/or accurate position determination for the particles. Look-up tables, model fits and the like may be determined during a calibration step during which particle positions are measured together with the interferograms, e.g. using confocal microscopy or other appropriate techniques. Furthermore, an artificial intelligence model or neural network may be trained with the interferogram signals related to one or more particle types to accurately predict the particle's vertical position in the flow channel for a variety of particle types. The same or a different artificial intelligence model or neural network may be trained with the interferogram signals related to one or more particle types to extract useful landmark features for each particle type.

In embodiments, the plurality of interference units and the corresponding plurality of delay arms are conveniently arranged within an optical sensing unit. The spectral bandwidth of the broadband source, or its related coherence length, can be selected according to a preset vertical position resolution value that is comparable to or smaller than the characteristic dimension of the interrogated objects passing through the flow channel. The overall flow channel depth or height may be conceptually divided into a plurality of vertical position intervals. A corresponding plurality of first optical delays can then be obtained by associating each first optical delay with the roundtrip time of the sample light inside the channel that results from the sample light being scattered or reflected by a virtual surface (reference plane) placed at a corresponding one of the plurality of vertical position intervals. Each of the plurality of delay arms includes a corresponding delay path for delaying the received portion of the reference light by a second optical delay that is commensurate with one of the plurality of first optical delays. A maximum attainable second optical delay with respect to the delay arms is preferably at least as large as or larger than the largest first delay inside the flow channel, e.g. at least as large as or larger than the roundtrip time of sample light entering the flow channel through the illumination optics and exiting the flow channel through the collection optics and being reflected by a wall of the flow channel opposite to the wall through which the sample light enters and exits the flow channel. An increment of the path length difference between consecutive delay arms is preferably chosen small enough to resolve, throughout the spectral bandwidth of the broadband source, all spatial frequency components (e.g. carrier oscillations) in the interferogram and to ensure position-specific, unique interferograms for each particle type. It is noted that increments are not restricted to being implemented between consecutive delay arms (e.g. adjacent delay arms in an arrayed layout) but may be assigned to delay arms in any order. This leads to permutations of the resulting interferogram from which the system can still retrieve the relevant object position data, e.g. via landmark feature extraction in the permuted interferograms, the comparison to permuted reference interferograms in a look-up table, etc.

In another aspect, the present invention relates to a flow cytometry system comprising an object localization system in accordance with embodiments of the invention as a subsystem, a broadband light source in optical communication with the object localization system, and a fluid delivery apparatus configured to supply the fluid with particles into the flow channel. The fluid delivery apparatus may include sheath flow components for focusing the particles along a lateral direction within the flow channel, perpendicular to the flow channel height direction. The flow cytometry system may be configured to use the acquired object's vertical position in the flow channel to correct or compensate for position-dependent changes in the scattering information (forward and/or side scatter), thus enhancing the accuracy of particle/object classification. Alternatively or additionally, the flow cytometry system may be configured to differentiate and/or sort particle types based on their vertical positions within the flow channel during flow cytometry applications, e.g. when also implementing flow fractionation mechanisms. The vertical positions may provide additional information for particle discrimination beyond traditional scattering and fluorescence measurements.

While the invention has been described in detail in the drawings and foregoing description, such descriptions are to be considered illustrative or exemplary and not restrictive. The foregoing description details certain embodiments of the invention. It will be appreciated, however, that no matter how detailed the foregoing appears in text, the invention may be practiced in many ways. Other variations to the disclosed embodiments can be understood and effected by those skilled in the art in practicing the claimed invention, from a study of the drawings, the disclosure and the appended claims. Any reference signs in the claims should not be construed as limiting the scope.

## Claims

1. An object localization system (100; 200; 500; 700) for use in flow cytometers, comprising:
a fluidic channel (130) configured to convey a stream of objects (140) suspended in a carrier medium across a detection volume (133),
a beamsplitter (102) for splitting broadband light into sample light on a sample arm (103a, 103b) and reference light on a reference arm (104),
the sample arm (103a, 103b) configured to irradiate the objects (140) crossing the detection volume (133) with sample light and collect the sample light scattered or reflected from individual ones of said objects back into the sample arm,
an optical sensing unit (110) configured to divide the reference light from the reference arm (104) into a plurality of delay arms (111-1; 111-k) and recombine delayed portions of the reference light from the plurality of delay arms (111-1; 111-k) with the sample light collected into the sample arm (103a, 103b) to generate corresponding portions of a spatially distributed interferogram (121),
wherein differences in the objects' location in a height direction of the fluidic channel, perpendicular to a direction of flow for the stream of objects, induce corresponding optical path length differences on the sample arm,
wherein an optical path length on each delay arm is commensurate with a distinct range of optical path lengths on the sample arm,
wherein the system is configured to correlate the interferogram caused by each object crossing the detection volume to the object's location in the height direction of the fluidic channel.

2. The object localization system (100) of claim 1, further comprising illumination optics (106) arranged on the sample arm (103a) to irradiate the objects (140) crossing the detection volume (133) with the sample light and collection optics (107) arranged on the sample arm (103b) to return the sample light scattered or reflected from the objects (140) to the sample arm.

3. The object localization system (100) of any one of the preceding claims, wherein the optical sensing unit (110) is further configured to distribute the sample light from the sample arm (103a, 103b) among a plurality of interference units (113-1; 113-k), each interference unit being configured to recombine a respective one of said delayed portions of the reference light with a distributed portion of the sample light and generate the corresponding portion of the spatially distributed interferogram (121) as an output.

4. The object localization system (100) of any one of the preceding claims, further including an array of photosensitive elements (112-1; 112-k) configured to detect the spatially distributed interferogram (121) in a plurality of discrete sampling points.

5. The object localization system (100) according to claim 4, wherein each photosensitive element (112-1; 112-k) of the array of photosensitive elements includes a balanced photodetector, and/or wherein the array of photosensitive elements is configured to reject a dc component of the spatially distributed interferogram.

6. The object localization system (500) of any one of claims 1 to 5, wherein the optical sensing unit (510) includes an array of interferometers, such as Mach-Zehnder interferometers, as detection channels, each interferometer (53a-b; 54a-b) of the array of interferometers including a respective one of the plurality of delay arms as a first interferometer arm (53a) and a second interferometer arm (53b) for receiving a portion of the sample light from the sample path, and each interferometer of the array of interferometers being configured to recombine light from the first and second interferometer arm into at least one interferometer output (52-1; 52-2k) to generate the corresponding portion of the spatially distributed interferogram at said at least one interferometer output, wherein an optical path length difference characteristic of each interferometer is increasing over the array of interferometers.

7. The object localization system (100) of any one of claims 1 to 5, the reference arm (104) and the sample arm (103a, 103b) being ramified inside the optical sensing unit (110), distinct ramifications of the reference arm (104) including distinct ones of the plurality of delay arms (111-1; 111-k), wherein paired ramifications of the sample arm and reference arm are connected to respective ones of a plurality of combiner elements (113-1; 113-k) of the optical sensing unit, each combiner element of the plurality of combiner elements being configured to superimpose light received from the connected pair of ramifications of the sample arm and reference arm to generate the corresponding portion of the spatially distributed interferogram.

8. The object localization system (100) of any one of the preceding claims, further comprising a processing unit (120) configured to receive input data representative of the spatially distributed interferogram (121) caused by one of the objects (140) crossing the detection volume (133), identify a landmark feature in the input data and correlate a location of the landmark feature in the input data to the object's location in the height direction of the fluidic channel (130).

9. The object localization system (100) of any one of the preceding claims, the optical path length along each delay arm (111-1; 111-k) increasing incrementally between consecutive delay arms, wherein increments of the optical path length range between 0.5 µm and 5.0 µm and/or an increment of the optical path length per unit thickness of the fluidic channel (130) is at most 0.5 µm⁻¹.

10. The object localization system (100; 200) of any one of the preceding claims, at least the optical sensing unit (110) being implemented as a photonic integrated circuit of a photonic integrated chip.

11. The object localization system (200) of claim 10, wherein at least a portion of the fluidic channel (130) is a microfluidic flow channel defined in a microfluidic layer of the photonic integrated chip or a microfluidic chip affixed to an outer surface of the photonic integrated chip, a side wall of the microfluidic flow channel (130) being adjacent to and in optical communication with the sample arm (203a, 203b) at the detection volume (133).

12. The object localization system (700) of any one of the preceding claims, wherein the reference arm (204) extends into an isolated section (731) of the fluidic channel (730) or a reference channel, inaccessible to the stream of objects, a reflective surface (75) being arranged to reflect the reference light at a reference position in the fluidic channel (730) or the reference channel.

13. A flow cytometry apparatus comprising a fluid delivery subsystem configured to supply the stream of objects suspended in the carrier medium to the fluidic channel, the object localization system according to any one of the preceding claims, and a broadband source (101) in optical communication with the object localization system.

14. An object localization method for use in flow cytometers, comprising:
conveying a stream of objects (140) suspended in a carrier medium across a detection volume (133) of a fluidic channel (130),
splitting broadband light into reference light on a reference path (104) and sample light on a sample path (103a, 103b),
illuminating at least one object of the stream of objects crossing the detection volume with the sample light,
collecting the sample light scattered or reflected from individual objects within the detection volume along the sample path,
delaying the reference light returned along the reference path (104) in a plurality of delay arms (111-1; 111-k),
recombining the sample light collected along the sample path (103a, 103b) with the reference light delayed along each of the plurality of delay arms (111-1; 111-k), thus generating a unique spatially distributed interferogram (121) for each object crossing the detection volume,
correlating the interferogram (121) caused by each object (140) crossing the detection volume (133) to a distance between the object and a virtual reference point along the sample path, thereby detecting the object's location in the fluidic channel (130) relative to the reference point,
wherein an optical path length on each delay arm is commensurate with a distinct range of optical path lengths on the sample path.
